(19) Europäisches Patentamt / European Patent Office / Office européen des brevets

(11) **EP 1 892 216 A2**

(12) **EUROPEAN PATENT APPLICATION**

(43) Date of publication:
    **27.02.2008 Bulletin 2008/09**

(51) Int Cl.:
    **C01B 3/38** (2006.01)   **C01B 3/50** (2006.01)
    **C01B 3/58** (2006.01)   **B01J 19/24** (2006.01)

(21) Application number: **07253279.9**

(22) Date of filing: **20.08.2007**

(84) Designated Contracting States:
    **AT BE BG CH CY CZ DE DK EE ES FI FR GB GR
    HU IE IS IT LI LT LU LV MC MT NL PL PT RO SE
    SI SK TR**
    Designated Extension States:
    **AL BA HR MK YU**

(30) Priority: **25.08.2006 JP 2006228533**

(71) Applicant: **NGK INSULATORS, LTD.**
    **Nagoya-City, Aichi Pref.  467-8530 (JP)**

(72) Inventors:
    • **Nakamura, Toshiyuki**
      **Nagoya-City**
      **Aichi-ken, 467-8530 (JP)**
    • **Mori, Nobuhiko**
      **Nagoya-City**
      **Aichi-ken, 467-8530 (JP)**

(74) Representative: **Paget, Hugh Charles Edward et al**
    **Mewburn Ellis LLP**
    **York House**
    **23 Kingsway**
    **London WC2B 6HP (GB)**

(54) **Selective permeation membrane reactor and method of manufacturing hydrogen gas**

(57)    There are disclosed a selective permeation membrane reactor (10) which includes a selective permeation membrane (31) having an excellent permeation performance and a separation performance with suppresses of methanation reaction of $CO_2$ contained in hydrogen-containing gas to efficiently perform CO methanation reaction and manufacture highly pure hydrogen, and a method of manufacturing a hydrogen gas.

The selective permeation membrane reactor includes a CO reducing unit for reducing carbon monoxide contained in concentrated hydrogen-containing gas; and the unit having a methanation catalyst layer which performs a methanation reaction to reduce carbon monoxide contained in the concentrated hydrogen-containing gas, and a reaction temperature control section for controlling temperature of the catalyst layer at 250°C or more and 350°C or less, thereby selectively treating carbon monoxide. As the methanation catalyst, Ru carried by a carrier made of alumina may be used.

FIG.1

Printed by Jouve, 75001 PARIS (FR)

**Description**

BACKGROUND OF THE INVENTION

Field of the Invention

The present invention relates to a selective permeation membrane reactor and a method of manufacturing hydrogen by use of the reactor. The present invention more particularly relates to a selective permeation membrane reactor which includes a selective permeation membrane having an excellent permeation performance and having a separation performance to maintain a leak level practically allowed at a reactive surface and which has an excellent reaction promoting property and which is capable of recovering highly pure hydrogen, and a method of manufacturing a hydrogen gas.

Description of the Related Art

In recent years, expectations for a fuel cell have been growing owing to an environmental problem and the like. Therefore, development of a technology concerning supply of hydrogen as a fuel of the fuel cell is advanced. In a case where impurities are included in a hydrogen-containing gas, a problem is to reduce these impurities before supplying the gas.

A permeation membrane reactor which selectively allows the permeation of hydrogen of the hydrogen-containing gas is known. The permeation membrane reactor has an advantage that reaction can proceed apparently in excess of an equilibrium reaction ratio in a reversible reaction system by removing selectively a reaction product from the system to the outside of the system, i.e., a drawing effect. In this case, when thickness of a permeation membrane of hydrogen, for example, a palladium (Pd) membrane is reduced, a permeation performance is improved. In addition, an amount of palladium (Pd) for use is reduced. This is also preferable in relation to costs. On the other hand, in current membrane forming and substrate technologies, when the thickness of the palladium (Pd) membrane is reduced, there is a tendency that membrane defects increase, a separation performance of the membrane deteriorates and a gas other than hydrogen also permeates the membrane. Therefore, in the actual condition, it is difficult to obtain the permeation performance of the permeation membrane which is compatible with the separation performance.

Moreover, when the permeation membrane has a small membrane thickness, the permeation performance improves, and a reaction promoting effect increases in a case where the membrane is used as the membrane reactor. On the other hand, when the membrane has a low separation performance, a component other than hydrogen (especially water ($H_2O$) which is a material gas component) leaks, and the reaction promoting effect obtained by drawing hydrogen decreases. Furthermore, when the permeation membrane rapidly deteriorates, a concentrated impurity gas leaks toward a membrane permeation side. In a case where a system to supply hydrogen obtained from the membrane permeation side to a solid polymer fuel cell (PEFC) is considered, there is a disadvantage that carbon monoxide (CO) of the concentrated impurity gas which has leaked and been introduced poisons electrodes.

As a reaction which eliminates such a disadvantage to reduce carbon monoxide (CO) concentration contained in the hydrogen-containing gas, a method is known in which a methanation reaction (CO or $CO_2$ $(+H_2) \rightarrow CH_4+H_2O$) is used (e.g., see Patent Document 1). In addition to this reaction, a selective oxidation process ($CO+1/2O_2 = CO_2$) is known.

In the technique of Patent Document 1, an auxiliary machine such as a compressor for air supply, which is required for a case where the selective oxidation process is adopted as a technique for reducing CO, is not required, and the whole system is set to be compact. In an unexpected situation in which the membrane rapidly deteriorates, a methanation catalyst is arranged on the membrane permeation side on which it is supposed that concentrated CO as a poisoning substance of the fuel cell electrodes leaks. In consequence, CO can be converted into $CH_4$ which is inactive with respect to the fuel cell electrodes.

[Patent Document 1] Japanese Patent No. 3432892

However, the invention disclosed in Patent Document 1 is excellent in that a fuel gas having a high hydrogen concentration can be supplied with the reduction of concentration of carbon monoxide (CO), but the permeation performance compatible with the separation performance of the permeation membrane and the reaction promoting property are not especially considered.

Moreover, in a case that the selective permeation membrane reactor in which a hydrogen separation membrane such as the Pd membrane is used, when the ratio of $CO_2$ leaked as the impurities in addition to CO leaked together with hydrogen from the permeation membrane is high, an unexpectedly high amount of hydrogen gas generated is lost due to the simultaneous $CO_2$ methanation reaction with the CO methanation reaction if CO leaked as the impurities from the membrane is treated by a CO methanation reaction. That is, the $CO_2$ methanation reaction is a reaction to consume four moles of $H_2$ per mole of $CO_2$. The loss of hydrogen due to the reaction is larger than that used for the CO methanation reaction. In this case, since a large amount of hydrogen is consumed by the methanation reaction of $CO_2$ to treat the

impurities, it is difficult to efficiently supply hydrogen.

SUMMARY OF THE INVENTION

An object of the present invention is to provide a selective permeation membrane reactor which includes a selective permeation membrane having an excellent permeation performance and having a separation performance capable of maintaining a leakage at a practically acceptable level from the aspect of the reaction, and manufacturing highly pure hydrogen with an efficient CO methanation reaction, but effective suppression of a $CO_2$ methanation reaction of $CO_2$ to be contained in a hydrogen-containing gas, and a method of manufacturing a hydrogen gas using the membrane.

To achieve the above object, the present inventors have carried out intensively studies on a treatment temperature of a highly concentrated hydrogen-containing gas in a unit for reducing CO concentration. As a result, the present invention has been completed. That is, according to the present invention, the following selective permeation membrane reactor and a method of manufacturing hydrogen by use of the reactor are provided.

[1] A selective permeation membrane reactor comprising: a section for supplying a material gas, a gas inlet portion through which the material gas supplied from the part of material gas supply is introduced, a main body portion in which the introduced material gas through the inlet portion is subjected to a predetermined reforming reaction to generate a reacted gas, a reaction tube having a gas outlet portion through which the reacted gas and an unreacted material gas are taken out, a separation tube having a selective permeation membrane which is disposed so as to communicate with the reaction tube and which selectively allows the permeation of hydrogen in the unreacted material gas and the reacted gas generated in the reaction tube to separate hydrogen as a concentrated hydrogen-containing gas containing carbon monoxide (CO), and a separation discharge port which discharges the separated concentrated hydrogen-containing gas, a reforming reaction catalyst which is disposed between the reaction tube and the separation tube and which promotes the reforming reaction of the material gas, and a unit for reducing CO concentration which is disposed so as to communicate with the separation tube and which reduces carbon monoxide contained in the concentrated hydrogen-containing gas discharged from the separation discharge port of the separation tube, wherein the unit for removing CO having a catalyst layer is provided with a methanation catalyst to perform a methanation reaction to reduce carbon monoxide contained in the concentrated hydrogen-containing gas, and a section for controlling reaction temperature by setting temperature of the catalyst layer for the methanation reaction at a range of 250°C to 350°C to selectively treat carbon monoxide.

[2] The selective permeation membrane reactor according to the above [1], wherein the catalyst layer to perform the methanation reaction includes a zirconia ($ZrO_2$)-containing carrier which carries a metal of the group VIII.

[3] The selective permeation membrane reactor according to the above [1] or [2], further comprising: flow rate adjustment means disposed at the unit for reducing CO concentration or on an upstream side of the unit for reducing CO concentration, wherein a value obtained by dividing a flow rate of the concentrated hydrogen-containing gas which flows into the unit for reducing CO concentration per unit time by a capacity of the catalyst layer is in a range of 5000 to 100000 $h^{-1}$.

[4] The selective permeation membrane reactor according to any one of the above [1] to [3], further comprising: the flow rate adjustment means disposed at the unit for reducing CO concentration or on the upstream side of the unit for reducing CO concentration, wherein assuming that the flow rate of the concentrated hydrogen-containing gas which flows into the unit for reducing CO concentration per unit time is a [$cm^3$/min] and a weight of ruthenium as the methanation catalyst of the unit for reducing CO concentration is b [mg], a value of $\alpha$ defined by the following equation is in a range of 1 to 500:

$$\alpha = a/b.$$

[5] The selective permeation membrane reactor according to any one of the above [1] to [4], further comprising: pressure adjustment means disposed at the unit for reducing CO concentration or on the upstream side of the unit for reducing CO concentration, wherein in the unit for reducing CO concentration, the methanation reaction of the concentrated hydrogen-containing gas is performed at a pressure of 0.01 to 2 atm.

[6] The selective permeation membrane reactor according to any one of the above [1] to [5], further comprising: the pressure adjustment means disposed at the unit for reducing CO concentration or on the upstream side of the unit for reducing CO concentration, wherein the pressure of the unit for reducing CO concentration is set to be higher than a pressure of the concentrated hydrogen-containing gas in the separation tube by the pressure adjustment means.

[7] The selective permeation membrane reactor according to any one of the above [1] to [6], wherein assuming that an area of the selective permeation membrane is c [$cm^2$] and the weight of ruthenium as the methanation catalyst of the unit for reducing CO concentration is b [mg], a value of $\beta$ defined by the following equation is in a range of 0.1 to 100:

$$\beta = b/c.$$

[8] The selective permeation membrane reactor according to any one of the above [1] to [7], wherein the selective permeation membrane is made of at least one of palladium and a palladium alloy.

[9] The selective permeation membrane reactor according to the above [8], wherein the selective permeation membrane has a membrane thickness of 0.01 to 10 $\mu$m, and has a hydrogen permeation coefficient of 50 ml/cm$^2$·min·atm$^{1/2}$ or more.

[10] The selective permeation membrane reactor according to any one of the above [1] to [9], wherein during the methanation reaction, an index $\gamma$ indicating a reaction selectivity of $CO_2$ (concentration of $CO_2$ in the concentrated hydrogen-containing gas after the methanation reaction/concentration of $CO_2$ in the concentrated hydrogen-containing gas before the methanation reaction $\times$ 100) is 50% or more.

[11] The selective permeation membrane reactor according to any one of the above [1] to [10], wherein a $CO_2$/CO concentration ratio after the methanation reaction (concentration of $CO_2$ in the concentrated hydrogen-containing gas/concentration of CO in the concentrated hydrogen-containing gas) is larger than the $CO_2$/CO concentration ratio before the methanation reaction.

[12] The selective permeation membrane reactor according to the above [11], wherein the $CO_2$/CO concentration ratio after the methanation reaction is 50 or more.

[13] A method of manufacturing a hydrogen gas, comprising: a generation step of subjecting a material gas to a reforming reaction to generate a reacted gas; a separation step of separating a concentrated hydrogen-containing gas including carbon monoxide (CO) by a selective permeation membrane which selectively allows the permeation of hydrogen in the reacted gas; and a step of reducing carbon monoxide contained in the concentrated hydrogen-containing gas, wherein in the reducing step, a temperature at which a methanation reaction is performed to reduce carbon monoxide contained in the concentrated hydrogen-containing gas is controlled at 250°C or more and 350°C or less, thereby selectively treating carbon monoxide.

[14] The method of manufacturing the hydrogen gas according to the above [13], wherein in the step for reducing the CO concentration, a value obtained by dividing a flow rate of the concentrated hydrogen-containing gas to perform the methanation reaction per unit time by a capacity of a catalyst layer including a methanation catalyst to perform the methanation reaction is in a range of 5000 to 100000 h$^{-1}$.

[15] The method of manufacturing the hydrogen gas according to the above [13] or [14], wherein in the step for reducing CO concentration, a selective permeation membrane reactor is used in which assuming that the flow rate of the concentrated hydrogen-containing gas which flows into a unit for reducing CO concentration for reducing carbon monoxide concentration per unit time is a [cm$^3$/min] and a weight of ruthenium as the methanation catalyst of the unit for reducing CO concentration is b [mg], a value of $\alpha$ defined by the following equation is in a range of 1 to 500:

$$\alpha = a/b.$$

[16] The method of manufacturing the hydrogen gas according to any one of the above [13] to [15], wherein the selective permeation membrane reactor is used in which assuming that an area of the selective permeation membrane is c [cm$^2$] and the weight of ruthenium as the methanation catalyst to perform the methanation reaction is b [mg], a value of $\beta$ defined by the following equation is in a range of 0.1 to 100:

$$\beta = b/c.$$

[17] The method of manufacturing the hydrogen gas according to any one of the above [13] to [16], wherein the step for reducing CO concentration is performed by a catalyst layer including a zirconia ($ZrO_2$)-containing carrier which carries a metal of the group VIII.

[18] The method of manufacturing the hydrogen gas according to any one of the above [13] to [17], wherein in the step for reducing CO concentration, the methanation reaction is performed, when the concentrated hydrogen-containing gas has a pressure of 0.01 to 2 atm.

[19] The method of manufacturing the hydrogen gas according to any one of the above [13] to [18], wherein in the separation step, the selective permeation membrane made of at least one of palladium and a palladium alloy is used.

[20] The method of manufacturing the hydrogen gas according to any one of the above [13] to [19], wherein a pressure of the concentrated hydrogen-containing gas in the step for reducing CO concentration is set to be higher than a pressure of the concentrated hydrogen-containing gas in the separation step.

[21] The method of manufacturing the hydrogen gas according to any one of the above [13] to [20], wherein the selective permeation membrane has a membrane thickness of 0.01 to 10 $\mu$m, and has a hydrogen permeation coefficient of 50 ml/cm$^2$•min•atm$^{1/2}$ or more.

[22] The method of manufacturing the hydrogen gas according to any one of the above [13] to [21], wherein during the methanation reaction in the step for reducing CO concentration, an index $\gamma$ indicating a reaction selectivity of $CO_2$ (concentration of $CO_2$ in the concentrated hydrogen-containing gas after the methanation reaction/concentration of $CO_2$ in the concentrated hydrogen-containing gas before the methanation reaction $\times$ 100) is 50% or more.

[23] The method of manufacturing the hydrogen gas according to any one of the above [13] to [22], wherein a $CO_2$/CO concentration ratio after the methanation reaction of the step for reducing CO concentration (concentration of $CO_2$ in the concentrated hydrogen-containing gas/concentration of CO in the concentrated hydrogen-containing gas) is larger than the $CO_2$/CO concentration ratio before the methanation reaction.

[24] The method of manufacturing the hydrogen gas according to the above [23], wherein the $CO_2$/CO concentration ratio after the methanation reaction is 50 or more.

In the selective permeation membrane reactor and the method of manufacturing the hydrogen gas of the present invention, the temperature of the catalyst layer to perform the methanation reaction is controlled to a predetermined temperature (250°C or more and 350°C or less). In consequence, CO which is a poisoning substance of fuel cell electrodes and which is included in the concentrated hydrogen-containing gas is selectively treated by the methanation reaction, the methanation reaction of another gas is suppressed to prevent consumption of hydrogen, and hydrogen can efficiently be manufactured. Especially, when a specific catalyst is selected, CO can efficiently be treated.

BRIEF DESCRIPTION OF THE DRAWINGS

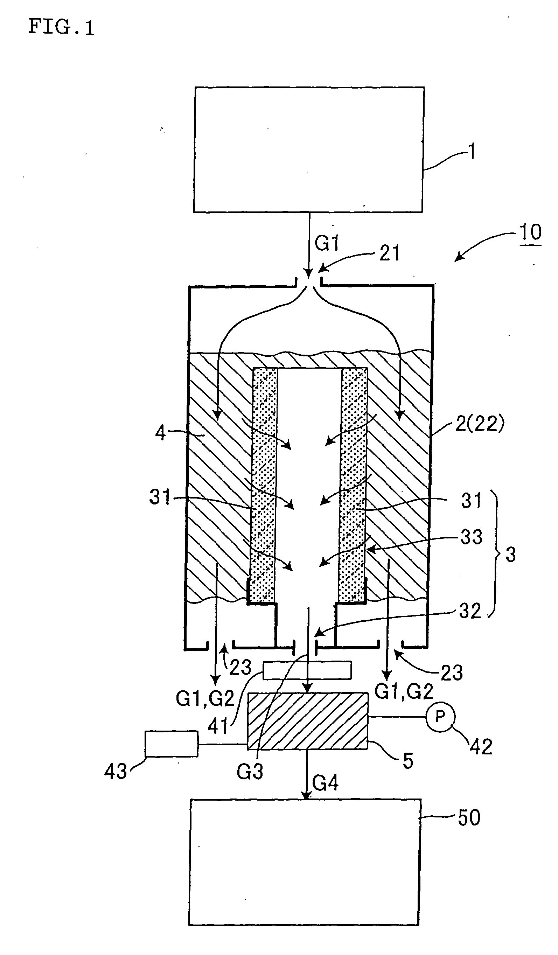

FIG. 1 is an explanatory view schematically showing one embodiment of a selective permeation membrane reactor of the present invention.

The following numerical references means a portion, a part, or a material, respectively as specified below: 1···section for supplying a material gas, 2···reaction tube, 3···separation tube, 4···reforming reaction catalyst, 5··· methanation catalyst, 10···selective permeation membrane reactor , 21···gas inlet portion, 22···main body portion, 23··· gas outlet portion, 31···permeation membrane, 32···separation discharge port, 33···porous substrate tube, 41···flow rate adjustment means, 42···pressure adjustment means, 43··· section for controlling reaction temperature, 50···fuel cell, G1···material gas, G2···reformed gas, G3···concentrated hydrogen-containing gas, G4···carbon monoxide (CO) treated gas.

DESCRIPTION OF THE PREFERRED EMBODIMENT

An embodiment of the present invention will hereinafter be described with reference to the drawings. The present invention is not limited to the following embodiment, and can be altered, modified or improved without imparting from the scope of the invention.

In a selective permeation membrane reactor and a method of manufacturing hydrogen of the present invention, when a specific catalyst is selected as a catalyst layer to perform a methanation reaction and a temperature of the methanation reaction to be performed by the catalyst layer is defined, CO contained in a concentrated hydrogen-containing gas is selectively treated by the methanation reaction.

FIG. 1 is an explanatory view schematically showing one embodiment of the selective permeation membrane reactor of the present invention. As shown in FIG. 1, a selective permeation membrane reactor 10 of the present embodiment includes a section for supplying a material gas 1; a reaction tube 2 having a gas inlet portion 21 through which a material gas G1 supplied from the section for supplying a material gas 1 is introduced, a main body portion 22 in which the introduced material gas G1 is subjected to a reforming reaction to generate a reacted gas (hereinafter sometimes referred to as "the reformed gas", too) G2, and a gas outlet portion 23 through which the reformed gas G2 and the unreacted material gas G1 are taken; a separation tube 3 having a selective permeation membrane 31 which is disposed so as to communicate with the reaction tube 2 and which selectively allows the permeation of hydrogen in the unreacted material gas G1 and the reformed gas G2 generated in the reaction tube 2 to separate hydrogen as a concentrated hydrogen-containing gas G3 including carbon monoxide (hereinafter referred to as "CO" in some case), and a separation discharge port 32 which discharges the separated concentrated hydrogen-containing gas G3; a reforming reaction catalyst 4 which is disposed between the reaction tube 2 and the separation tube 3 and which promotes the reforming reaction of the material gas G1; and a unit for reducing CO concentration which is disposed so as to communicate with the separation tube 3 and which reduces carbon monoxide (CO) contained in the concentrated hydrogen-containing gas G3 discharged from the separation discharge port 32 of this separation tube 3. Moreover, the selective permeation membrane 31 has a membrane thickness of 0.01 $\mu$m or more and 10 $\mu$m or less. In consequence, the selective permeation membrane having an excellent permeation performance and a separation performance to maintain a leak standard practically allowed at a reactive surface is obtained, and an amount of the concentrated hydrogen-containing gas G3 to permeate the membrane can be secured.

In the selective permeation membrane reactor 10 of the present embodiment, as the unit for reducing CO concentration, a catalyst layer is further disposed on a downstream side of the selective permeation membrane 31 of the separation tube 3. The catalyst layer includes a methanation catalyst 5 which reduces, by a methanation reaction, the concentration of carbon monoxide (CO) leaking from the selective permeation membrane 31 and contained in the concentrated hydrogen-containing gas G3. Especially, when a temperature range to perform the methanation reaction is defined, the methanation reaction of $CO_2$ can be suppressed to selectively treat CO.

Constituting elements will hereinafter be described.

(A section for supplying a material gas)

There is not any special restriction on the section for supplying a material gas 1 for use in the present embodiment. However, for example, the material gas may be supplied via a pipe through a flow rate control unit from a storage container. It is to be noted that the section for supplying a material gas 1 may be constituted integrally with the reaction tube 2 so as to minimize this device, or the a section for supplying a material gas may separately detachably be disposed away from the reaction tube 2.

Examples of the material gas G1 to be supplied from the section for supplying a material gas 1 to the reaction tube 2 include hydrocarbons such as methane, ethane and propane; organic compounds (hereinafter referred to as "oxygen-containing hydrocarbon" in some case) such as alcohols, for example, methanol, ethanol and the like including oxygen atoms, ketones and ethers; and water ($H_2O$).

It is to be noted that, in the present embodiment, as the material gas G1, a reaction system (e.g., $CH_4 + H_2O \rightarrow CO + 3H_2$) with methane, methanol and water ($H_2O$) including carbon monoxide as a reforming material is mainly described. In addition, the present invention is broadly applicable to reactions in which hydrogen is generated using water ($H_2O$) as a material, for example, a reforming reaction in which hydrocarbon such as propane or butane and oxygen-containing hydrocarbon such as ethanol or dimethyl ether (DME) are materials, and a water gas shift reaction (e.g., $CO + H_2O \rightarrow CO_2 + H_2$) in which hydrogen is obtained from a reaction between carbon monoxide (CO) and water ($H_2O$). Furthermore, the present invention is applicable to a reaction system to which the reforming material, water ($H_2O$), oxygen ($O_2$) (air) and carbon dioxide are added.

(Reaction Tube)

The reaction tube of the selective permeation membrane reactor of the present invention has the gas inlet portion through which the material gas supplied from the section for supplying a material gas is introduced, the main body portion in which the introduced material gas is subjected to the predetermined reforming reaction to generate the reacted gas, and the gas outlet portion through which the reacted gas and the unreacted material gas are taken out. Specifically, the reaction tube 2 for use in the present embodiment is constituted of a cylinder-like member (e.g., a cylindrical member) including the gas inlet portion 21 which is an inlet of the material gas G1, the gas outlet portion 23 which is an outlet of a non-separated gas and the main body portion 22 having a predetermined inner space.

(Separation Tube)

The separation tube of the selective permeation membrane reactor of the present invention has the selective permeation membrane which is disposed so as to communicate with the reaction tube and which selectively allows the permeation of hydrogen in the unreacted material gas and the reacted gas generated in the reaction tube to separate hydrogen as the concentrated hydrogen-containing gas including carbon monoxide (CO), and the separation discharge port which discharges the separated concentrated hydrogen-containing gas. Specifically, examples of the separation tube 3 for use in the present embodiment include a bottomed cylindrical separation tube having the selective permeation membrane 31 formed on a porous substrate tube 33 and having one end portion closed.

As the selective permeation membrane, a membrane having a membrane thickness of 0.01 $\mu$m or more and 10 $\mu$m or less and having a hydrogen permeation coefficient of 50 ml/$cm^2 \cdot min \cdot atm^{1/2}$ or more may be used. The selective permeation membrane constituted in this manner advantageously has an excellent permeation performance, and a separation performance to maintain a leak level practically allowed at a reactive surface. That is, in the selective permeation membrane of the selective permeation membrane reactor of the present invention, an amount of hydrogen to be obtained per unit permeation membrane area increases. Therefore, the reactor can be set to be compact.

There is not any special restriction on the selective permeation membrane as long as the above conditions are satisfied. Preferable examples of the membrane include a palladium (Pd) membrane and an alloy membrane of palladium (Pd) and silver (Ag) which have a capability of selectively allowing the permeation of hydrogen.

Since the selective permeation membrane has a membrane thickness of 0.01 $\mu$m or more and 10 $\mu$m or less, the excellent permeation and separation performances can be secured. The membrane thickness is preferably 0.1 to 5 $\mu$m, more preferably 0.5 to 3.0 $\mu$m. If the membrane thickness of the selective permeation membrane exceeds 10 $\mu$m, a permeation rate of hydrogen decreases, and a reaction promoting effect obtained by drawing hydrogen tends to be reduced.

Furthermore, it is preferable that the hydrogen permeation coefficient indicates a permeation performance of 50 ml/cm$^2$•min•atm$^{1/2}$ or more, more preferably 150 ml/cm$^2$•min•atm$^{1/2}$ or more. If the hydrogen permeation coefficient is less than 50 ml/cm$^2$•min•atm$^{1/2}$, the permeation rate of hydrogen decreases, and the reaction promoting effect obtained by drawing hydrogen tends to be reduced. It is to be noted that, in the present specification, the "hydrogen permeation coefficient" is a value (K) calculated by equation $Y = K\Delta P^{1/2}$, in which Y is a permeation flow rate and $\Delta P^{1/2}$ is a difference of 1/2 square of a hydrogen partial pressure between a supply side and a permeation side.

Examples of a material of the porous substrate tube 33 include metals such as alumina, silica, silica-alumina, mullite, cordierite, zirconia, carbon, porous glass and an SUS filter having a treated surface.

(Reforming Reaction Catalyst)

The reforming reaction catalyst of the present invention is disposed between the reaction tube and the separation tube, and promotes the reforming reaction of the material gas. Specifically, the reforming reaction catalyst 4 for use in the present embodiment is disposed in the inner space of the main body portion 22 excluding a space where the separation tube 3 is disposed so as to promote the reforming reaction. Examples of the reforming reaction catalyst include nickel-alumina, ruthenium-alumina and rhodium-alumina.

(Unit for reducing CO concentration)

The unit for reducing CO concentration of the present invention is an apparatus for reducing carbon monoxide (CO) concentration contained in the concentrated hydrogen-containing gas discharged from the separation discharge port of this separation tube, and is disposed so as to communicate with the separation tube. Such a unit for reducing CO concentration can reduce carbon monoxide (CO) concentration contained in the concentrated hydrogen-containing gas (hereinafter referred to as "the permeation gas" in some case) containing carbon monoxide (CO) to a concentration of 10 ppm or less. As the unit for reducing CO concentration, the gas is treated by a methanation process. That is, when the permeation gas is directly treated by the methanation reaction using the methanation catalyst, carbon monoxide (CO) concentration contained in this permeation gas can be reduced.

When the methanation process is adopted as a technique to reduce carbon monoxide (CO) concentration, an auxiliary machine such as a compressor for supplying oxygen (air) is unnecessary as compared with a case where a selective oxidation process is adopted. Therefore, there is an advantage that the whole system can be set to be compact.

Moreover, in an unexpected situation in which the selective permeation membrane rapidly deteriorates, it is supposed that concentrated carbon monoxide (CO) leaks. This carbon monoxide (CO) is a poisoning substance of electrodes of a fuel cell. Therefore, if concentrated carbon monoxide (CO) leaks, the electrodes of the fuel cell might be damaged. Therefore, when the methanation catalyst is arranged on the permeation side (a side on which carbon monoxide (CO) leaks) of the selective permeation membrane, there is an advantage that carbon monoxide (CO) which has leaked can be converted into methane (CH$_4$) which is inactive with respect to the electrodes of the fuel cell.

The unit for reducing CO concentration has a catalyst layer (the methanation catalyst 5) to perform the methanation reaction which reduces carbon monoxide (CO) concentration contained in the concentrated hydrogen-containing gas, and a section for controlling reaction temperature by setting temperature of the catalyst layer for the methanation reaction 43. The methanation reaction can be carried out by controlling the catalyst layer temperature at a prescribed temperature by the temperature control part 43. In this case, the methanation reaction is carried out by controlling the catalyst layer temperature at preferably 250°C to 350°C, further preferably 250°C to 300°C.

(Methanation Catalyst)

The methanation catalyst 5 for use in the present embodiment is disposed on a downstream side of the selective permeation membrane 31, and reduces, by the methanation reaction, the concentration of carbon monoxide (CO) which has leaked from the selective permeation membrane 31 (i.e., carbon monoxide (CO) contained in the concentrated hydrogen-containing gas G3). Moreover, the concentrated hydrogen-containing gas G3 in which carbon monoxide (CO) concentration is reduced can be separated as a carbon monoxide (CO) treated gas G4. At this time, carbon monoxide (CO) contained in the concentrated hydrogen-containing gas G3 is hydrogenated and converted into a gas (e.g., methane) other than CO. Examples of the converted gas other than CO include hydrocarbons such as ethane, methanol and ethanol in addition to methane.

As the methanation catalyst 5 for use in hydrogenating CO, a catalyst carried by a zirconia ($ZrO_2$) containing carrier may be used. Moreover, as the methanation catalyst 5, metals of the VIII group including ruthenium, rhodium, nickel and the like are preferable. Especially, ruthenium is preferable.

The methanation reaction includes the catalyst (e.g., the above example), and is performed at an operation temperature of, preferably 250°C to 350°C, especially preferably 250°C to 300°C as described above. If the operation temperature is less than 250°C, $CO_2$ methanation can be suppressed. However, in this case, since the catalyst has low activity, a reaction rate is small, and a methanation catalyst reactor might be enlarged. Since the reactor has a large temperature difference from a reforming reactor (the reaction tube 2), the reforming reactor needs to be disposed away from the methanation catalyst reactor, or heat exchange needs to be positively performed to rapidly lower the temperature. Therefore, compactness of the system might be lost. On the other hand, if the operation temperature exceeds 350°C, loss of hydrogen due to the methanation of $CO_2$ might increase. Therefore, the temperature at which the methanation is performed is preferably in a range of 250 to 350°C.

Moreover, the selective permeation membrane reactor 10 includes flow rate adjustment means 41 disposed at the unit for reducing CO concentration or on an upstream side of the unit for reducing CO concentration, and SV (a flow rate of the concentrated hydrogen-containing gas which flows into the unit for reducing CO concentration per unit time/a capacity of the catalyst layer) of the methanation reaction may be set to 5000 to 100000 $h^{-1}$. A reason why SV is set to this range is that CO can efficiently be reduced.

Furthermore, assuming that the flow rate of the concentrated hydrogen-containing gas which flows into the unit for reducing CO concentration per unit time to a [unit: $cm^3$/min] and that a weight of ruthenium as the methanation catalyst 5 of the unit for reducing CO concentration is b [unit: mg], the flow rate adjustment means 41 may set a value of $\alpha$ ($\alpha = a/b$) to 1 to 500 (preferably 3 to 200, further preferably 5 to 100).

In addition, assuming that an area of the selective permeation membrane is c [unit: $cm^2$] and the weight of ruthenium as the methanation catalyst 5 of the unit for reducing CO concentration is b [unit: mg], a value of $\beta$ ($\beta = b/c$) may be in a range of 0.1 to 100 (preferably 0.15 to 50, further preferably 0.5 to 20).

Furthermore, it is preferable that the selective permeation membrane reactor 10 includes pressure adjustment means 42 at the unit for reducing CO concentration or on the upstream side of the unit for reducing CO concentration and that the methanation reaction of the concentrated hydrogen-containing gas is performed at a pressure of 0.01 to 2 atm. by the unit for reducing CO concentration. When the pressure is in this range, CO can efficiently be reduced.

In addition, according to the selective permeation membrane reactor 10 of the present invention, during the methanation reaction, a concentration drop ratio of $CO_2$ (concentration of $CO_2$ in the concentrated hydrogen-containing gas after the methanation reaction/concentration of $CO_2$ in the concentrated hydrogen-containing gas before the methanation reaction $\times$ 100) is set to 50% or more.

Furthermore, a $CO_2$/CO concentration ratio after the methanation reaction (concentration of $CO_2$ in the concentrated hydrogen-containing gas/concentration of CO in the concentrated hydrogen-containing gas) is larger than that before the methanation reaction, and the $CO_2$/CO concentration ratio after the methanation reaction is set to 50 or more.

When the selective permeation membrane reactor of the present invention is constituted as described above, the concentration of hydrogen ($H_2$) in the carbon monoxide (CO) treated gas G4 can be kept at 90% or more, and the concentration of carbon monoxide (CO) can be reduced to 10 ppm or less.

The carbon monoxide (CO) treated gas G4 obtained by the selective permeation membrane reactor 10 of the present embodiment and having the carbon monoxide (CO) of reduced concentration of 10 ppm or less is introduced into, for example, a fuel cell 50 for effective application. Especially, it is effective to apply the present embodiment to a phosphate fuel cell and a solid polymer fuel cell (PEFC) in a case where the CO concentration of the fuel cell 50 needs to be reduced. It is further effective to apply the present embodiment to the solid polymer fuel cell (PEFC) in which the CO concentration of a fuel gas needs to be set to several ppms or less.

Moreover, since the solid polymer fuel cell (PEFC) is small and light as compared with another cell and has a characteristic that the cell operates at a temperature of 100°C or less, the cell is preferably used as a portable power source or an electric car power source. When the cell is used as the electric car power source, the cell needs to be small and light and further needs to have a resistance to impact such as vibration. To apply the present invention to such an electric car power source, it is preferable to apply the present invention in a configuration in which the separation tube 3 and the methanation catalyst 5 are integrated as described above.

(Method of manufacturing Hydrogen)

A method of manufacturing a hydrogen gas according to the present invention includes a generation step of subjecting a material gas to a reforming reaction to generate a reacted gas, a separation step of separating a concentrated hydrogen-containing gas including carbon monoxide (CO) by a selective permeation membrane which selectively allows the permeation of hydrogen in the reacted gas, and a step for reducing CO concentration of reducing carbon monoxide (CO) concentration contained in the concentrated hydrogen-containing gas. In the step for reducing CO concentration, a temperature at which a methanation reaction is performed to reduce carbon monoxide (CO) concentration contained in the concentrated hydrogen-containing gas is controlled to 250°C or more and 350°C or less, thereby selectively treating CO.

Specifically, as shown in FIG. 1, in the selective permeation membrane reactor 10 of the present embodiment, the material gas G1 supplied from the section for supplying a material gas 1 is introduced into the reaction tube 2 from the gas inlet portion 21, and comes in contact with the reforming reaction catalyst 4. In this case, the reformed gas G2 which is a mixed gas including hydrogen is generated owing to reaction or the like. A part of the generated reformed gas G2 or the like permeates the selective permeation membrane 31 of the separation tube 3, and is selectively drawn and discharged as the concentrated hydrogen-containing gas G3 from the separation discharge port 32.

The concentrated hydrogen-containing gas G3 discharged from the separation discharge port 32 comes in contact with the methanation catalyst 5 disposed on the downstream side of the selective permeation membrane 31 of the separation tube 3. In consequence, the carbon monoxide (CO) treated gas G4 (a highly pure hydrogen gas) is manufactured in which carbon monoxide (CO) concentration is reduced to about 10 ppm or less by the methanation catalyst 5.

When the gas comes in contact with the methanation catalyst 5 to cause the methanation reaction, the temperature is controlled to 250°C or more and 350°C or less (more preferably, 250°C to 300°C). In consequence, even in a case where a large ratio of $CO_2$ leaks as impurities in addition to CO which leaks from the permeation membrane together with hydrogen, $CO_2$ methanation of $CO_2$ included in the concentrated hydrogen-containing gas is suppressed. Therefore, the CO methanation can efficiently be performed to suppress consumption of hydrogen due to the methanation, and highly pure hydrogen can efficiently be manufactured and supplied to the fuel cell 50.

That is, the $CO_2$ methanation is a reaction to consume four moles of $H_2$ per mole of $CO_2$, and hydrogen is largely lost owing to the reaction as compared with the CO methanation. However, in a case where the reaction temperature is controlled to the above-mentioned range to suppress the $CO_2$ methanation reaction and only CO having such a disadvantage as to poison the electrodes is effectively treated, hydrogen can efficiently be manufactured.

On the other hand, the generated reformed gas G2 and the like which have not permeated the separation tube (the unreacted material gas G1 and the reformed gas G2) are discharged from the reactor 10 via the gas outlet portion 23 of the reaction tube 2.

It is to be noted that FIG. 1 illustrates a system in which the manufactured carbon monoxide (CO) treated gas G4 is supplied to the fuel cell 50. In this case, to miniaturize the device, the methanation catalyst 5 may be arranged in the separation tube 3.

[Examples]

The present invention will hereinafter be described in more detail in accordance with examples, but the present invention is not limited to these examples.

(Selective Permeation Membrane Reactor)

As a selective permeation membrane reactor, a reactor having the following constitution was used. That is, as a separation tube, a bottomed cylindrical alumina porous material (outer diameter of 10 mm, length of 75 mm) having one end portion closed was used. A palladium (Pd)-silver (Ag) alloy membrane to selectively allow the permeation of hydrogen was formed as a selective permeation membrane on the surface of the separation tube by a plating process. A composition of the selective permeation membrane was set to 75 mass% of palladium (Pd) and 25 mass% of silver (Ag) in consideration of a hydrogen permeation performance, and a membrane thickness was in a range of 0.5 to 3.0 μm. As a methanation catalyst as a unit for reducing CO concentration, a ruthenium-zirconia catalyst (manufactured by JGC Corp.) was used. A space between a reaction tube and the selective permeation membrane was filled with a reforming catalyst (manufactured by N. E. Chemcat Corp.), and a space on a permeation downstream side was filled with a methanation catalyst. It is to be noted that a methanation reaction was performed with SV (a flow rate of a concentrated hydrogen-containing gas which flowed into the unit for reducing CO concentration per unit time/a capacity of a catalyst layer) in a range of 30000 to 80000 h$^{-1}$ at an operation temperature of 200°C to 500°C.

This selective permeation membrane reactor is connected so that a section for supplying a material gas can supply hydrocarbons such as methane and butane, oxygen-containing hydrocarbon such as ethanol, water, carbon dioxide and oxygen as material gases. The material gas is selected, mixed and supplied to the reaction tube as needed. It is to be noted that liquid materials such as water and ethanol are gasified by a vaporizer before supplied.

Moreover, on a downstream side of the selective permeation membrane, a flow rate meter (model "W-NK-0.5" manufactured by Shinagawa Fuel Co., Ltd.) for measuring a gas amount and a gas chromatography (model "G3810" manufactured by J Science Laboratory Co., Ltd.) for determining a quantity of a gas component are connected. The flow rate meter and the gas chromatography are also connected to the selective permeation membrane of the reaction tube on a non-permeation downstream side. Furthermore, on an upstream side of the flow rate meter, a liquid trap is disposed which is set to about 5°C so as to trap a liquid component of a liquid (water or the like) at normal temperature. Around the reaction tube and the methanation catalyst, a heater for heating can be installed so as to heat the tube and the catalyst from the outside.

(Evaluation)

In Examples 1 to 6, the above-mentioned selective permeation membrane reactor was used, and a reforming reaction was performed using methane, methanol and carbon monoxide as material gases. At this time, the following test was conducted to evaluate carbon monoxide concentration and carbon dioxide concentration.

(Test Method)

The material gas was supplied to the selective permeation membrane reactor to perform the reforming reaction. After the reforming reaction, carbon monoxide included in the separated permeation gas was reduced by the methanation catalyst installed on the downstream side of the selective permeation membrane. At this time, a gas flow rate and a gas composition were checked on a permeation side and a non-permeation side of the selective permeation membrane to calculate carbon monoxide and carbon dioxide in the permeation gas (the concentrated hydrogen-containing gas).

The carbon monoxide concentration, hydrogen purity and the like of the permeation gas (the concentrated hydrogen-containing gas) were measured with the gas chromatography (model "G3810" manufactured by J Science Laboratory Co., Ltd.). In the present example, the carbon monoxide concentration before the methanation reaction (referred to as "CO concentration (ppm)") was 1000 ppm, and the hydrogen purity (%) before the methanation reaction was 98.2 to 98.7%.

The conditions and results of reactions of Examples 1 to 7 and Comparative Examples 1 to 3 are compiled and shown in Table 1. In the table, SV is a value obtained by dividing a flow rate of the concentrated hydrogen-containing gas which flows into the unit for reducing CO concentration (the catalyst layer) per unit time by a capacity of the catalyst layer; $\alpha = a/b$ (assuming that the flow rate of the concentrated hydrogen-containing gas which flows into the unit for reducing CO concentration per unit time is a [unit: $cm^3$/min] and a weight of ruthenium as the methanation catalyst of the unit for reducing CO concentration is b [unit: mg]); $\beta = b/c$ (assuming that an area of the selective permeation membrane is c [unit: $cm^2$] and the weight of ruthenium as the methanation catalyst of the unit for reducing CO concentration is b [unit: mg]); and $\gamma$ is a ratio of the concentration of $CO_2$ in the concentrated hydrogen-containing gas after the methanation reaction/the concentration of $CO_2$ in the concentrated hydrogen-containing gas before the methanation reaction $\times$ 100.

[Table 1]

| | | Example 1 | Example 2 | Example 3 | Example 4 | Example 5 | Example 6 | Example 7 | Example Comparative 1 | Comparative Example 2 | Comparative Example 3 |
|---|---|---|---|---|---|---|---|---|---|---|---|
| | Hydrogen purity before methanation | 98.5% | 98.5% | 98.5% | 98.5% | 95.2% | 98.7% | 98.3% | 98.3% | 98.6% | 95.2% |
| Reforming reaction | Material gas | Methane, water | Methane, water | Methane, water | Methane, water | Methane, water | Methanol, water | CO, water | Methane, water | Methane, water | Methane, water |
| | Reforming temperature | 550°C | 550°C | 550°C | 550°C | 550°C | 300°C | 400°C | 550°C | 550°C | 550°C |
| Methanation reaction | Temperature | 300°C | 350°C | 250°C | 300°C | 300°C | 300°C | 350°C | 500°C | 200°C | 200°C |
| | Pressure | 1 atm | 1 atm | 1 atm | 1 atm | 1 atm | 1 atm | 1 atm | 1 atm | 1 atm | 1 atm |
| | Catalyst | $Ru/ZrO_2$ | $Ru/ZrO_2$ | $Ru/ZrO_2$ | $Ru/ZrO_2$ | $Ru/ZrO_2$ | $Ru/ZrO_2$ | $Ru/ZrO_2$ | $Ru/ZrO_2$ | $Ru/ZrO_2$ | $Ru/ZrO_2$ |
| | SV(catalyst amount) | $30000h^{-1}$ | $30000h^{-1}$ | $30000h^{-1}$ | $80000h^{-1}$ | $30000h^{-1}$ | $30000h^{-1}$ | $30000h^{-1}$ | $30000h^{-1}$ | $30000h^{-1}$ | $30000h^{-1}$ |
| | $\alpha$ | 24.9 | 24.9 | 24.9 | 42 | 24.9 | 24.9 | 24.9 | 24.9 | 24.9 | 24.9 |
| | $\beta$ | 3.7 | 3.7 | 3.7 | 2.3 | 3.7 | 3.7 | 3.7 | 3.7 | 3.7 | 3.7 |
| After methanation reaction | CO concentration | 1.1ppm | 2.6ppm | 0.9ppm | 1.6ppm | 6.7ppm | 0.8ppm | 2.1ppm | 8.2ppm | 61ppm | 105.3ppm |
| | $\gamma$ | 85.5% | 71.4% | 98.8% | 92.7% | 90.1 % | 88.1% | 66.6% | 2.2% | 99.9% | 99.5% |
| | $CO_2/CO$ concentration ratio | 8260 | 2145 | 13180 | 3896 | 1343 | 10451 | 3109 | 3.2 | 1.4 | 33.9 |

As shown in Example 1, when parameters of the reforming reaction and the methanation reaction are regulated, CO can selectively be reduced efficiently. That is, in Example 1, the CO concentration is 1.1 ppm, and CO is reduced. Moreover, $\gamma$ is as large as 85.5%, and $CO_2$ is not much reduced by the methanation reaction, but the $CO_2$/CO concentration ratio is as large as 8260. It is indicated that CO is reduced as compared with $CO_2$. In Example 2, it is indicated that even at a methanation reaction temperature of 350°C, $\gamma$ is large, and $CO_2$ is not much reduced, but the $CO_2$/CO concentration ratio is large, and CO is reduced as compared with $CO_2$. In Example 3, it is indicated that even at a methanation reaction temperature of 250°C, CO is reduced as compared with $CO_2$. In Example 4, it is indicated that even at a large SV value of 80000 h$^{-1}$, $\gamma$ is large, and $CO_2$ is not much reduced, but the $CO_2$/CO concentration ratio is large, and CO is reduced as compared with $CO_2$.

In Example 5, it is indicated that, even in a case where the hydrogen purity before the methanation is 95.2% indicating that a large amount of CO is contained, a methanation catalyst has a sufficient activity, $\gamma$ is large, and $CO_2$ is not much reduced, but the $CO_2$/CO concentration ratio is large, and CO is reduced as compared with $CO_2$. In Examples 6, 7, it is indicated that, even in a case where the reforming temperature is set to be as comparatively low as 300, 400°C, $\gamma$ is large, and $CO_2$ is not much reduced, but the $CO_2$/CO concentration ratio is large, and CO is reduced as compared with $CO_2$. Therefore, when the conditions of the methanation reaction are defined as shown in the table, the reforming temperature is set close to the methanation temperature, and the reactor can be set to be compact.

On the other hand, in Comparative Example 1, it is indicated that, since the temperature of the methanation reaction is as high as 500°C, $\gamma$ is small, $CO_2$ is reduced and the $CO_2$/CO concentration ratio is small. That is, it is seen that, when the methanation temperature is set to be high, a reaction selectivity cannot be obtained. In Comparative Example 2, it is indicated that, since the temperature of the methanation reaction is as low as 200°C, the CO concentration cannot be reduced to 10 ppm or less. In Comparative Example 3, the hydrogen purity before the methanation is low, a large amount of CO is contained and the temperature of the methanation reaction is as low as 200°C. It is indicated that, even in this case, the CO concentration cannot be reduced to 10 ppm or less.

It is seen from Table 1 that, when the reaction temperature of the methanation reaction is set to 250°C or more and 350°C or less during the treatment performed by the methanation reaction, a reaction rate can be increased, and an excellent selectivity of CO and $CO_2$ can be obtained. In the present invention, since the methanation temperature can be set to be comparatively high in a range of 250 to 350°C, the reaction temperature can be set to be close to a temperature of a reaction such as a methanol reforming reaction (Example 6, about 300°C) or a shift reaction (Example 7, about 400°C) in which hydrogen can be manufactured at a comparatively low temperature. Therefore, the reforming reaction and the methanation reaction can be performed in an integrated membrane reactor (without performing heat exchange), and a compact reactor can be constituted. As a methanation catalyst for use, it is preferable to use a catalyst of a zirconia carrier capable of reducing CO while suppressing $CO_2$ methanation at 250 to 350°C.

In a case where catalyst species and reaction conditions are appropriately selected, the only CO methanation can selectively proceed, and $H_2$ loss due to the $CO_2$ methanation can largely be reduced. According to the selective permeation membrane reactor and the method of manufacturing the hydrogen gas of the present invention, even if the selective permeation membrane has defects such as pinholes, the concentration of carbon monoxide as impurities is reduced, and highly pure hydrogen can be manufactured.

A selective permeation membrane reactor and a method of manufacturing a hydrogen gas by use of this selective permeation membrane reactor according to the present invention are preferably used in various industrial fields in which a concentrated hydrogen gas is selectively required. The present invention is preferably used in fields of fuel cells such as a phosphate fuel cell and a solid polymer fuel cell in which a reformed gas is used as a fuel gas, the reformed gas being obtained by reforming hydrocarbons such as methane and propane, or organic compounds, for example, alcohols such as methanol and ethanol including oxygen atoms, ketones and ethers, the reformed gas including hydrogen and carbon monoxide and including hydrogen as a main component.

**Claims**

**1.** A selective permeation membrane reactor comprising:

a section for supplying a material gas,
a gas inlet portion through which the material gas supplied from the part of material gas supply is introduced,
a main body portion in which the introduced material gas through the inlet portion is subjected to a predetermined reforming reaction to generate a reacted gas,
a reaction tube having a gas outlet portion through which the reacted gas and an unreacted material gas are taken out,
a separation tube having a selective permeation membrane which is disposed so as to communicate with the reaction tube and which selectively allows the permeation of hydrogen in the unreacted material gas and the reacted gas generated in the reaction tube to separate hydrogen as a concentrated hydrogen-containing gas containing carbon monoxide (CO),

a separation discharge port which discharges the separated concentrated hydrogen-containing gas,

a reforming reaction catalyst which is disposed between the reaction tube and the separation tube and which promotes the reforming reaction of the material gas, and,

a unit for removing CO which is disposed so as to communicate with the separation tube and which reduces carbon monoxide contained in the concentrated hydrogen-containing gas discharged from the separation discharge port of the separation tube,

wherein the part for removing CO having a catalyst layer is provided with a methanation catalyst to perform a methanation reaction to reduce carbon monoxide concentration contained in the concentrated hydrogen-containing gas, and a section for controlling reaction temperature by setting temperature of the catalyst layer for the methanation reaction at a range of 250°C to 350°C to selectively treat carbon monoxide.

2.  The selective permeation membrane reactor according to claim 1, wherein the catalyst layer to perform the methanation reaction includes a zirconia ($ZrO_2$)-containing carrier which carries a metal of the group VIII.

3.  The selective permeation membrane reactor according to claim 1 or 2, further comprising:

    flow rate adjustment means disposed at the unit for reducing CO concentration or on an upstream side of the unit for reducing CO concentration,

    wherein a value obtained by dividing a flow rate of the concentrated hydrogen-containing gas which flows into the unit for reducing CO concentration per unit time by a capacity of the catalyst layer is in a range of 5000 to 100000 $h^{-1}$.

4.  The selective permeation membrane reactor according to any one of claims 1 to 3, further comprising:

    the flow rate adjustment means disposed at the unit for reducing CO concentration or on the upstream side of the unit for reducing CO concentration,

    wherein assuming that the flow rate of the concentrated hydrogen-containing gas which flows into the unit for reducing CO concentration per unit time is a [$cm^3$/min] and a weight of ruthenium as the methanation catalyst of the unit for reducing CO concentration is b [mg], a value of $\alpha$ defined by the following equation is in a range of 1 to 500:

$$\alpha = a/b.$$

5.  The selective permeation membrane reactor according to any one of claims 1 to 4, further comprising:

    pressure adjustment means disposed at the unit for reducing CO concentration or on the upstream side of the unit for reducing CO concentration,

    wherein in the unit for reducing CO concentration, the methanation reaction of the concentrated hydrogen-containing gas is performed at a pressure of 0.01 to 2 atm.

6.  The selective permeation membrane reactor according to any one of claims 1 to 5, further comprising:

    the pressure adjustment means disposed at the unit for reducing CO concentration or on the upstream side of the unit for reducing CO concentration,

    wherein the pressure of the unit for reducing CO concentration is set to be higher than a pressure of the concentrated hydrogen-containing gas in the separation tube by the pressure adjustment means.

7.  The selective permeation membrane reactor according to any one of claims 1 to 6, wherein assuming that an area of the selective permeation membrane is c [$cm^2$] and the weight of ruthenium as the methanation catalyst of the unit for reducing CO concentration is b [mg], a value of $\beta$ defined by the following equation is in a range of 0.1 to 100:

$$\beta = b/c.$$

**8.** The selective permeation membrane reactor according to any one of claims 1 to 7, wherein the selective permeation membrane is made of at least one of palladium and a palladium alloy.

**9.** The selective permeation membrane reactor according to claim 8, wherein the selective permeation membrane has a membrane thickness of 0.01 to 10 $\mu m$, and has a hydrogen permeation coefficient of 50 ml/cm$^2$•min•atm$^{1/2}$ or more.

**10.** The selective permeation membrane reactor according to any one of claims 1 to 9, wherein during the methanation reaction, an index $\gamma$ indicating a reaction selectivity of $CO_2$ (concentration of $CO_2$ in the concentrated hydrogen-containing gas after the methanation reaction/concentration of $CO_2$ in the concentrated hydrogen-containing gas before the methanation reaction $\times$ 100) is 50% or more.

**11.** The selective permeation membrane reactor according to any one of claims 1 to 10, wherein a $CO_2/CO$ concentration ratio after the methanation reaction (concentration of $CO_2$ in the concentrated hydrogen-containing gas/concentration of CO in the concentrated hydrogen-containing gas) is larger than the $CO_2/CO$ concentration ratio before the methanation reaction.

**12.** The selective permeation membrane reactor according to claim 11, wherein the $CO_2/CO$ concentration ratio after the methanation reaction is 50 or more.

**13.** A method of manufacturing a hydrogen gas, comprising:

a generation step of subjecting a material gas to a reforming reaction to generate a reacted gas;
a separation step of separating a concentrated hydrogen-containing gas including carbon monoxide (CO) by a selective permeation membrane which selectively allows the permeation of hydrogen in the reacted gas; and
a step for reducing CO concentration of reducing carbon monoxide contained in the concentrated hydrogen-containing gas,

wherein in the step for reducing CO concentration, a temperature at which a methanation reaction is performed to reduce carbon monoxide contained in the concentrated hydrogen-containing gas is controlled to 250°C or more and 350°C or less, thereby selectively treating carbon monoxide.

**14.** The method of manufacturing the hydrogen gas according to claim 13, wherein in the step for reducing CO concentration, a value obtained by dividing a flow rate of the concentrated hydrogen-containing gas to perform the methanation reaction per unit time by a capacity of a catalyst layer including a methanation catalyst to perform the methanation reaction is in a range of 5000 to 100000 h$^{-1}$.

**15.** The method of manufacturing the hydrogen gas according to claim 13 or 14, wherein in the step for reducing CO concentration, a selective permeation membrane reactor is used in which assuming that the flow rate of the concentrated hydrogen-containing gas which flows into a unit for reducing CO concentration for reducing carbon monoxide concentration per unit time is a [cm$^3$/min] and a weight of ruthenium as the methanation catalyst of the unit for reducing CO concentration is b [mg], a value of $\alpha$ defined by the following equation is in a range of 1 to 500:

$$\alpha = a/b.$$

**16.** The method of manufacturing the hydrogen gas according to any one of claims 13 to 15, wherein the selective permeation membrane reactor is used in which assuming that an area of the selective permeation membrane is c [cm$^2$] and the weight of ruthenium as the methanation catalyst to perform the methanation reaction is b [mg], a value of $\beta$ defined by the following equation is in a range of 0.1 to 100:

$$\beta = b/c.$$

**17.** The method of manufacturing the hydrogen gas according to any one of claims 13 to 16, wherein the step for reducing CO concentration is performed by a catalyst layer including a zirconia ($ZrO_2$)-containing carrier which carries a metal of the group VIII.

**18.** The method of manufacturing the hydrogen gas according to any one of claims 13 to 17, wherein in the step for reducing CO concentration, the methanation reaction is performed, when the concentrated hydrogen-containing gas has a pressure of 0.01 to 2 atm.

**19.** The method of manufacturing the hydrogen gas according to any one of claims 13 to 18, wherein in the separation step, the selective permeation membrane made of at least one of palladium and a palladium alloy is used.

**20.** The method of manufacturing the hydrogen gas according to any one of claims 13 to 19, wherein a pressure of the concentrated hydrogen-containing gas in the step for reducing CO concentration is set to be higher than a pressure of the concentrated hydrogen-containing gas in the separation step.

**21.** The method of manufacturing the hydrogen gas according to any one of claims 13 to 20, wherein the selective permeation membrane has a membrane thickness of 0.01 to 10 $\mu$m, and has a hydrogen permeation coefficient of 50 ml/cm2·min·atm$^{1/2}$ or more.

**22.** The method of manufacturing the hydrogen gas according to any one of claims 13 to 21, wherein during the methanation reaction in the step for reducing CO concentration, an index $\gamma$ indicating a reaction selectivity of $CO_2$ (concentration of $CO_2$ in the concentrated hydrogen-containing gas after the methanation reaction/concentration of $CO_2$ in the concentrated hydrogen-containing gas before the methanation reaction $\times$ 100) is 50% or more.

**23.** The method of manufacturing the hydrogen gas according to any one of claims 13 to 22, wherein a $CO_2$/CO concentration ratio after the methanation reaction of the step for reducing CO concentration (concentration of $CO_2$ in the concentrated hydrogen-containing gas/concentration of CO in the concentrated hydrogen-containing gas) is larger than the $CO_2$/CO concentration ratio before the methanation reaction.

**24.** The method of manufacturing the hydrogen gas according to claim 23, wherein the $CO_2$/CO concentration ratio after the methanation reaction is 50 or more.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3432892 B